# EUROPÄISCHE PATENTANMELDUNG

(11) **EP 1 763 024 A1**
(43) Veröffentlichungstag der Anmeldung: **14.03.2007**
(21) Anmeldenummer: 06017740.9
(22) Anmeldetag: 25.08.2006
(51) Int. Cl.: G11B 7/244, G11B 7/0065

(54) **Verfahren und Vorrichtungen zum Speichern einer dreidimensionalen Anordnung von Datenbits in einem Festkörper**

(30) Priorität: 26.08.2005 DE 102005040671
(71) Anmelder: Max-Planck-Gesellschaft zur Förderung der Wissenschaften e.V., 80539 München (DE)
(72) Erfinder: Hell, Stefan, Prof. Dr., 37085 Göttingen (DE); Jakobs, Stefan, Dr., 37083 Göttingen (DE); Andresen, Martin, Dipl.-Biol., 37073 Göttingen (DE); Stiel, Andrè-C., Dipl.-Biol., 44867 Bochum (DE); Eggeling, Christian, Dr., 37085 Göttingen (DE)
(74) Vertreter: Rehberg Hüppe + Partner

(57) **Zusammenfassung**

Ein Verfahren zum Schreiben einer dreidimensionalen Anordnung von Datenbits in einen Festkörper (2) weist die Schritte Bereitstellen des Festkörpers (2) aus einem Protein (4), das mit einem optischen Schreibsignal (9) veränderbare Fluoreszenzeigenschaften aufweist und das in kristalliner Form vorliegt, und Einstellen einer der dreidimensionalen Anordnung von Datenbits entsprechenden räumlichen Verteilung der Fluoreszenzeigenschaften des Proteins (4) in dem Festkörper (2) mit dem Schreibsignal (9) auf.

## Beschreibung

Die Erfindung betrifft ein Verfahren und eine Vorrichtung zum Schreiben einer dreidimensionalen Anordnung von Datenbits in einen Festkörper. Weiterhin betrifft die Erfindung einen Datenspeicher mit einem Festkörper, d. h. einen Festkörperdatenspeicher, und auch Verwendungsmöglichkeiten eines solchen Datenspeichers.

### STAND DER TECHNIK

Derzeit im Einsatz befindliche Festkörperdatenspeicher, wie beispielsweise so genannte Festplatten oder auch Kompaktdisks (CDs), weisen ein zweidimensionales Speicherarray auf. D. h., eine dreidimensionale Anordnung von Datenbits muss in eine zweidimensionale Anordnung übersetzt werden, bevor sie in das zweidimensionale Speicherarray bekannter Festkörperdatenspeicher geschrieben werden kann. Zudem ist die Speicherkapazität zweidimensionaler Speicherarrays durch die bei bekannten Festkörperdatenspeichern nur begrenzt zur Verfügung stehende Fläche beschränkt. Es wäre wünschenswert, beide Nachteile durch die Bereitstellung von Festkörperdatenspeichern mit dreidimensionalen Speicherarrays zu überwinden.

Von verschiedenen GFP-artigen Proteinen, also solchen Proteinen, die dem grün fluoreszierenden Protein (GFP) ähnlich sind, ist es bekannt, dass sie durch ein optisches Signal aus einem nicht-fluoreszierenden Zustand in einen fluoreszierenden Zustand überführt werden können. Dabei ist diese Überführung mit einem optischen Signal möglich, dessen Wellenlänge gleich der Wellenlänge ist, mit dem die Fluoreszenz des Proteins in seinen fluoreszierenden Zustand anregbar ist. Allerdings ist die zum Überführen des Proteins in den fluoreszierenden Zustand erforderliche Intensität des optischen Signals größer als sie anschließend zur Anregung der Fluoreszenz in diesem Zustand benötigt wird. Zu den bekannten GFP-artigen Proteinen mit diesen Eigenschaften zählt das Protein asFP595 (auch als asCP bezeichnet), das natürlich in der Seeanemone *Anemonia sulcata* vorkommt. Besonders ausgeprägt sind die hier geschilderten Eigenschaften bei dem Mutant asFP595-A148S (Konstantin A. Lukyanov et al.: Natural Animal Coloration can be Determind by a Non-Fluorescent Green Fluorescent Protein Homolog", The Journal of Biological Chemistry, Vol. 275, No. 84, Ausgabe vom 25.08.2000, Seiten 25879 bis 25882).

Aus der US 2005/0111270 A1 ist ein optischer Datenspeicher bekannt, der eine polymere Speicherschicht aufweist, in die Bakteriorhodopsin, ein an sich kristallines Retinalprotein, das in Halobakterien auftritt, oder photoaktives gelbes Protein (photo-active yellow protein = PYP), eingebettet ist. Beide genannten Proteine sind nicht toxisch und weisen eine photoinduzierbare Anisotropie auf, die zum Schreiben von Datenbits in die Speicherschicht genutzt werden kann. Die Datenbits können dann mit einem als Sonde dienenden Laserstrahl wieder aus der Speicherschicht ausgelesen werden.

### AUFGABE DER ERFINDUNG

Der Erfindung liegt die Aufgabe zugrunde, ein Verfahren und eine Vorrichtung zum Schreiben einer dreidimensionalen Anordnung von Datenbits in einen Festkörper sowie einen Datenspeicher mit einem Festkörper aufzuzeigen, bei denen die dreidimensionale Anordnung von Datenbits in dem Festkörper gespeichert werden kann. Außerdem sollen besonders vorteilhafte Verwendungsmöglichkeiten des neuen Festkörperdatenspeichers aufgezeigt werden.

### LÖSUNG

Die Aufgabe wird erfindungsgemäß durch ein Verfahren mit den Merkmalen des Patentanspruchs 1, eine Vorrichtung mit den Merkmalen des Patentanspruchs 5, einen beschriebenen Datenspeicher mit den Merkmalen des Patentanspruchs 10, ein Lebensmittel mit einem essbaren Datenspeicher nach dem Patentanspruch 12 und ein Sicherheitsmerkmal mit einem Datenspeicher nach dem Patentanspruch 13 sowie ein Sicherheitsmerkmal mit den Merkmalen des Patentanspruchs 14 gelöst.

Bevorzugte Ausführungsformen des neuen Verfahrens sind in den abhängigen Ansprüchen 2 bis 4 beschrieben. Die abhängigen Ansprüche 6 bis 9 betreffen bevorzugte Ausführungsformen der neuen Vorrichtung, und der Patentanspruch 11 ist auf einen bevorzugte Datenspeicher gerichtet.

### BESCHREIBUNG DER ERFINDUNG

Bei dem neuen Verfahren zum Schreiben einer dreidimensionalen Anordnung von Datenbits in einen Festkörper wird der Festkörper aus einem Protein, das mit einem optischen Schreibsignal veränderbare Fluoreszenzeigenschaften aufweist und das in kristalliner Form vorliegt, bereitgestellt. Der Festkörper aus einem derartigen kristallinen Protein ermöglicht es, mit dem optischen Schreibsignal eine der dreidimensionalen Anordnung von Datenbits entsprechende räumliche Verteilung der Fluoreszenzeigenschaften des Proteins in dem Festkörper einzustellen. D. h., die in dem Festkörper verfügbare Speichermatrix ist dreidimensional. Sie ermöglicht damit nicht nur das direkte Schreiben von dreidimensionalen Anordnungen von Datenbits, sondern die Speicherkapazität ist durch die dritte Dimension des Speicherarrays ganz grundsätzlich dramatisch erweitert. Dabei muss als überraschend angesehen werden, dass Festkörper aus Proteinen, die mit einem optischen Schreibsignal veränderbare Fluoreszenzeigenschaften aufweisen überhaupt in kristalliner Form verfügbar sind, um einen Festkörper ausbilden zu können. Es hat sich jedoch herausgestellt, dass derartige Kristalle aus Proteinen, die bereits für mit einem optischen Schreibsignal veränderbare Fluoreszenzeigenschaften bekannt sind, hergestellt werden können, ohne dass diese Veränderbarkeit ihrer Fluoreszenzeigenschaften verloren geht.

Insbesondere kann der Festkörper bei dem neuen Verfahren aus einem Protein bereitgestellt werden, das mit einem Schreibsignal aus einen nicht fluoreszierenden in einen fluoreszierenden Zustand überführbar ist. Auch der umgekehrte Fall einer gezielten lokalen Beseitigung des fluoreszierenden Zustands mit dem optischen Schreibsignal ist möglich. In jedem dieser Fälle kann die mit dem Schreibsignal eingestellte räumliche Verteilung der Fluoreszenzeigenschaften des Proteins in dem Festkörper durch ein fluoreszenzmikroskopisches Verfahren in ansich bekannter Weise ausgelesen werden.

Auch beim Einstellen der räumlichen Verteilung der Fluoreszenzeigenschaften des Proteins in dem Festkörper mit dem optischen Schreibsignal kann auf aus der Fluoreszenzmikroskopie bekannte Techniken zurückgegriffen werden, die dort beispielsweise eingesetzt werden, um einen Fluoreszenzfarbstoff in einer Probe mit hoher Auflösung räumlich selektiv anzuregen, und die hier eine hohe räumliche Auflösung der eingestellten Verteilung der Fluoreszenzeigenschaften über den Festkörper ermöglichen.

Bei konkreten Ausführungsformen des neuen Verfahrens wird der Festkörper aus einem Protein bereitgestellt, bei dem das optische Schreibsignal, mit dem es aus dem nicht-fluoreszierenden in den fluoreszierenden Zustand überführbar ist, dieselbe Wellenlänge aufweist, mit dem seine Fluoreszenz in dem fluoreszierenden Zustand anregbar ist.

Der Festkörper kann bei dem neuen Verfahren aus einem Protein bereitgestellt werden, bei dem die Veränderung der Fluoreszenzeigenschaften mit dem optischen Schreibsignal auf einem Einphotonenprozess beruht. Wenn hingegen diese Veränderung auf einem Mehrphotonenprozess beruht, kann die räumliche Auflösung beim Einstellen der dreidimensionalen Anordnung von Datenbits entsprechenden räumlichen Verteilung der Fluoreszenzeigenschaften unter Ausnutzung der nicht linearen Abhängigkeit der Anregung eines Mehrphotonenprozesses von der eingestrahlten Lichtintensität erhöht werden.

Ganz besonders bevorzugt sind solche Ausführungsformen des neuen Verfahrens, bei denen der Festkörper aus einem Protein bereitgestellt wird, bei dem die mit dem Schreibsignal herbeigeführte Änderung der Fluoreszenzeigenschaften umkehrbar ist. So kann das neue Verfahren unter Verwendung desselben Festkörpers aus dem kristallinen Protein mehrfach hintereinander durchgeführt werden, um unterschiedliche dreidimensionale Anordnungen von Datenbits in den Festkörper zu schreiben.

Konkret kann der Festkörper bei dem neuen Verfahren aus einem Protein bereitgestellt werden, bei dem die mit dem Schreibsignal herbeigeführte Änderung der Fluoreszenzeigenschaften mit einem optischen Löschsignal umkehrbar ist. So können dann aufeinander folgend unterschiedliche räumliche Verteilungen der Fluoreszenzeigenschaften des Proteins in dem Festkörper, die unterschiedlichen dreidimensionalen Anordnungen von Datenbits entsprechen, mit dem Schreibsignal eingestellt werden, wobei zuvor die jeweils vorhergehende räumliche Verteilung mit dem Löschsignal ausgelöscht wird.

Konkret kann der Festkörper bei dem neuen Verfahren aus einem Protein bereitgestellt werden, das GFP-artig ist. D. h., der Festkörper kann beispielsweise aus dem Protein asFP595 oder einem Mutant dieses Proteins, insbesondere dem Mutant asFP595A143S, bereitgestellt werden. Aus diesen Proteinen sind überraschenderweise Kristalle ausbildbar, in denen die Proteine ihre ansich bekannten veränderbaren Fluoreszenzeigenschaften beibehalten.

Der Festkörper kann bei dem neuen Verfahren als Einkristall oder aus miteinander verpressten Kleinkristallen aus dem Protein bereitgestellt werden. Soweit eine Ausrichtung des Schreibsignals oder auch des Löschsignals an Kristallachsen des kristallinen Proteins erfolgen soll, ist die Ausbildung des Festkörpers als Einkristall deutlich bevorzugt.

Beispielsweise aufgrund des in Proteinkristallen typischerweise eingelagerten Kristallwasser ist es zur Stabilisierung der kristallinen Struktur des Festkörpers bei dem neuen Verfahren bevorzugt, wenn der Festkörper in einem gepufferten wässrigern Medium immergiert oder in eine festen Matrix eingebettet bereitgestellt wird.

Die räumliche Verteilung der Fluoreszenzeigenschaften des Proteins in dem Festkörper kann durch räumliches Abscannen des Festkörpers mit einem modulierten lokalisierten Schreibsignal oder durch Beaufschlagen des Festkörpers mit einem räumlich modulierten Schreibsignal eingestellt werden. Dabei ist unter dem räumlichen Abscannen des Festkörpers mit einem modulierten lokalisierten Schreibsignal die Beaufschlagung des Festkörpers zu jeder Zeit in nur einem oder einer begrenzten Anzahl einzelner Punkte zu verstehen. Das Beaufschlagen des Festkörpers mit einem räumlich modulierten Schreibsignal bedeutet hingegen, dass geschlossene zwei- oder dreidimensionale Bereiche des Festkörpers gleichzeitig mit dem Schreibsignal beaufschlagt werden, wodurch das Schreiben der dreidimensionalen Anordnung von Datenbits in den Festkörper grundsätzlich schneller durchführbar ist.

Das Auslesen der räumlichen Verteilung der Fluoreszenzeigenschaften des Proteins in dem Festkörper kann durch räumlich aufgelöstes Erfassen der Fluoreszenzeigenschaften in dem Festkörper erfolgen. Dabei kann, wie bereits oben angemerkt wurde, auf bekannte fluoreszenzmikroskopische Techniken zurückgegriffen werden, um beispielsweise eine ausreichend hohe räumliche Auflösung bei dem Erfassen der Fluoreszenzeigenschaften zu erzielen.

Typischerweise wird bei dem neuen Verfahren der Festkörper zum Auslesen der Fluoreszenzeigenschaften des Proteins in dem Festkörper mit Anregungslicht beaufschlagt. Hierbei kann zum Erzielen einer räumlichen Auflösung beim Erfassen der Fluoreszenzeigenschaften des Proteins in dem Festkörper eine Lokalisierung des Anregungslichts erfolgen. Es ist aber auch möglich, den gesamten Festkörper homogen mit dem Anregungslicht zu beaufschlagen und die räumliche Auflösung ausschließlich im Bereich der Registrierung des Fluoreszenzlichts von dem Festkörper zu bewirken.

Bei der neuen Vorrichtung zum Schreiben einer dreidimensionalen Anordnung von Datenbits in einen Festkörper ist der Festkörper aus einem Protein, das mit einem Schreibsignal veränderbare Fluoreszenzeigenschaften aufweist und in kristalliner Form vorliegt, ausgebildet. Dieses und weitere Details der neuen Vorrichtung wurden bereits im Zusammenhang mit dem neuen Verfahren erläutert.

Der neue beschriebene Datenspeicher weist einen Festkörper aus einem Protein in kristalliner Form auf, wobei der Festkörper eine einer dreidimensionalen Anordnung von Datenbits entsprechende räumliche Verteilung von Fluoreszenzeigenschaften des Proteins aufweist. Auch dieses und weitere Details des neuen Datenspeichers sind inhaltlich bereits oben im Zusammenhang mit dem neuen Verfahren erläutert worden.

Eine besonders interessante Verwendung des neuen Datenspeichers besteht darin, dass er als essbarer Datenspeicher in Lebensmittel integriert wird. Dabei bedeutet essbar, dass der Datenspeicher insgesamt nicht toxisch ist und als Protein in der menschlichen Verdauung biologisch abgebaut wird, soweit nicht bereits zuvor beim Erhitzen des Lebensmittels eine Denaturierung des Proteins erfolgt ist. Es versteht sich, dass im Rahmen des Abbaus bzw. der Denaturierung des Proteins jede dem Datenspeicher bis dahin zu eigene räumliche Verteilung von Fluoreszenzeigenschaften verloren geht.

Eine weitere besonders interessante Verwendung des neuen Datenspeichers besteht darin, dass er als Sicherheitsmerkmal, insbesondere für ein Wertpapier, wie beispielsweise einen Geldschein, oder einen Identitäts- oder Berechtigungsausweis, wie beispielsweise einen Personalausweis, einen Führerschein oder eine Kreditkarte, verwendet wird. Ein solches Sicherheitsmerkmal ist besonders fälschungssicher, da zu seiner Nachahmung die Nachzucht der den wesentlichen Bestandteil des Sicherheitsmerkmals ausbildenden Kristalle aus dem Protein mit den richtigen veränderbaren Fluoreszenzeigenschaften erforderlich wäre.

Auf Details der Veränderbarkeit der Fluoreszenzeigenschaften eines kristallinen Proteins stellt das weitere neue Sicherheitsmerkmal ab, das ebenfalls insbesondere für ein Wertpapier, wie beispielsweise einen Geldschein, oder einen Identitäts- oder Berechtigungsausweis, wie beispielsweise einen Personalausweis, einen Führerschein oder eine Kreditkarte, vorgesehen ist und das einen Kristall aus einem Protein aufweist, welches in dem Kristall mit einem optischen Signal bestimmter Intensität mit einer bestimmten Überführungsrate aus einem ersten, nicht-fluoreszierenden Zustand in einen zweiten, fluoreszierenden Zustand überführbar ist, wobei die Überführungsrate als Antwort auf das optische Signal optisch erfassbar ist. Typische Überführungsraten liegen bei den hier näher beschriebenen Proteinen je nach der Intensität des verwendeten optischen Signals in dem Bereich von 1 ms bis zu einer Sekunde. Die Echtheit dieses Sicherheitsmerkmals kann durch Messen der Überführungsrate und Vergleich mit einer Vorgabe, die absolut oder auch durch andere Merkmale des jeweiligen Wertpapiers bzw. Identitäts- oder Berechtigungsausweises festgelegt sein kann, überprüft werden.

Die bevorzugten Ausführungsformen dieses weiteren neuen Sicherheitsmerkmals entsprechen wieder den bevorzugten Ausführungsformen des neuen Verfahrens.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft, ohne dass diese zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand von verschiedenen bevorzugten Ausführungsformen der neuen Vorrichtung sowie des darin enthaltenen neuen Datenspeichers und des damit durchgeführten neuen Verfahrens weiterhin erläutert und beschrieben.
- **Fig. 1**: zeigt den prinzipiellen Aufbau einer ersten Ausführungsform der neuen Vorrichtung mit einer rechtwinklichten Anordnung einer Schreib- und Löscheinrichtung einerseits und einer Ausleseeinrichtung andererseits und
- **Fig. 2**: zeigt den prinzipiellen Aufbau einer zweiten Ausführungsform der neuen Vorrichtung, bei der es sich um eine Abwandlung der Ausführungsform gemäß Fig. 1 handelt.
- **Fig. 3**: zeigt den prinzipiellen Aufbau einer dritten Ausführungsform der neuen Vorrichtung mit voneinander getrennten Schreib-, Lösch- und Ausleseeinrichtungen.
- **Fig. 4**: zeigt den prinzipiellen Aufbau einer koaxialen Anordnung einer Schreibeinrichtung einerseits und einer hiervon getrennten Ausleseeinrichtung andererseits; und
- **Fig. 5**: zeigt den prinzipiellen Aufbau einer fünften Ausführungsform der neuen Vorrichtung mit einer kombinierten Schreib- und Ausleseeinrichtung.

### FIGURENBESCHREIBUNG

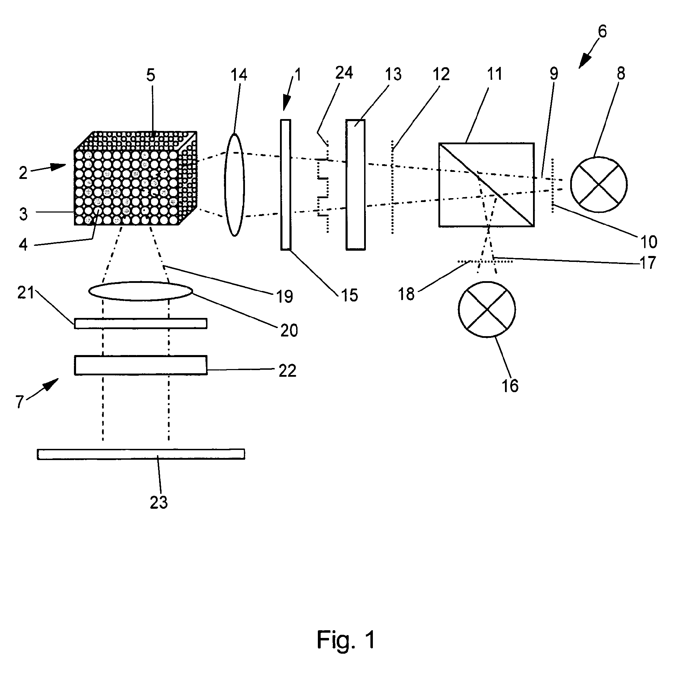

Alle Vorrichtungen 1 gemäß den **Fig. 1-5** weisen einen Festkörper 2 auf, der den Datenspeicher 3 der jeweiligen Vorrichtung ausbildet. Der Festkörper 2 besteht aus kristallinem Protein 4. Dabei kann der Festkörper 2 aus Kleinkristallen des Proteins 4 zusammengesetzt sein. Insbesondere kann es sich bei dem Festkörper 2 aber auch um einen Einkristall 5 aus dem Protein 4 handeln, was in Fig. 1 bei dem Festkörper 2 zeichnerisch angedeutet ist. Das Protein 4, das den Festkörper 2 in kristalliner Form ausbildet, ist ein GFP-artiges Protein. Konkret handelt es sich hier um den A143SA-Mutant des Proteins asFP595, das natürlich in der Seeanemone *Anemonia sulcata* vorkommt. Bei dem Mutant asFP595-A143S sind die im Folgenden erläuterten Eigenschaften besonders gut ausgeprägt. Es ist davon auszugehen, dass dies auch für andere Mutanten des Proteins asFP595, das auch als asCP bezeichnet wird, gilt. Es wird daher als lohnend angesehen, unter zufällig erzeugten Mutanten des Proteins asFP595 nach derartigen Proteinen mit den gewünschten Eigenschaften zu screenen. Weiterhin ist davon auszugehen, dass auch andere GFP-artige Proteine, also Proteine, die dem grün fluoreszierenden Protein (GFP) ähnlich sind, diese gewünschten Eigenschaften aufweisen. Bei diesen gewünschten Eigenschaften handelt es sich darum, dass das Protein in kristallinem Zustand mit einem Schreibsignal bezüglich seiner Fluoreszenzeigenschaften verändert werden kann. Konkret ist bei den hier näher spezifizierten Proteinen mit dem Schreibsignal eine Überführung des Proteins von einem nicht-fluoreszierenden in einen fluoreszierenden Zustand möglich. Hierdurch kann eine räumliche Verteilung von fluoreszierenden Proteinen 4 in dem Festkörper 2 hervorgerufen werden, um in dem Datenspeicher 3 eine dreidimensionale Anordnung von Datenbits zu speichern. Dabei kann der fluoreszierende Zustand einer "1" und der nicht-fluoreszierende Zustand einer "0" bei dem jeweiligen Datenbit entsprechen oder umgekehrt. Zusätzlich ist es wünschenswert, wenn das Protein 4 des Festkörpers 2 mit einem Löschsignal in seinen Ursprungszustand zurückgeführt werden kann. Bei den hier näher spezifizierten Proteinen bedeutet dies ein Quenschen des fluoreszierenden Zustands mit einem optischen Löschsignal. Dieses optische Löschsignal liegt in dem Fall von GFP-artigen Proteinen typischerweise in dem blauen Bereich des sichtbaren Lichts bei einer Wellenlänge von etwa 450 nm, während die Wellenlänge des optischen Schreibsignals, mit dem das Protein in den fluoreszierenden Zustand überführt werden kann, in den grünen Bereich des sichtbaren Lichts, d. h. bei einer Wellenlänge von etwa 550 nm liegt. Mit derselben Wellenlänge von etwa 550 nm ist das Protein auch in seinem fluoreszierenden Zustand zur Fluoreszenz anregbar. Die hierfür notwendige Intensität von Anregungslicht ist aber deutlich geringer als die notwendige Intensität des optischen Schreibsignals gleicher Wellenlänge zum Überführen des Proteins in seinen fluoreszierenden Zustand, so dass das Anregungslicht und das optische Schreibsignal aufgrund ihrer Energiedichte im Bereich des jeweiligen Proteins unterscheidbar sind. Für eine stärker lokalisierbare Überführung des Proteins in seinen fluoreszierenden Zustand kann auch auf eine Mehrphotonenanregung, beispielsweise durch zwei Photonen doppelter Wellenlänge, zurückgegriffen werden. Die gewünschte höhere räumliche Ortsauflösung ergibt sich dabei durch die quadratische Abhängigkeit der Anregung eines Zweiphotonenprozesses von der angestrahlten Lichtintensität.

Die Herstellung von kristallinem Protein mit den gewünschten Fluoreszenzeigenschaften kann wie folgt erfolgen: Das gereinigte Protein wird durch Ultrafiltration konzentriert und für die Kristallisation in 20 mM Tris-HCl, pH 7,5/120 nM NaCl bis auf 28 mg/ml aufgenommen. Die Kristallisation des Proteins selbst kann über Nacht durch Dampfdiffusion aus einem stehenden Tropfen unter Verwendung eines Reservoirs erfolgen, das 20 % Polyethylenglykol 3.350, 0,2 M Tris-HCl (pH 7,1) und 0,3 M NaCl enthält. Kristalle der hier näher spezifizierten GFP-artigen Proteine enthalten Kristallwasser. Zu ihrer Stabilisierung ist es erforderlich, sie entweder in gepufferten wässrigen Medien zu immergieren oder sie in eine stabilisierenden festen Matrix, wie beispielsweise aus Polyvinylalkohol (PVA), einzubetten. Wenn der Festkörpers 2 aus diesem Grund in einem flüssigen Medium immergiert ist, ist es sinnvoll, sämtliche dem Festkörper zugewandten Objektive, die Teile der Vorrichtung 1 sind, hieran anzupassen, indem beispielsweise an das flüssige Medium angepasste Immersionsobjektive verwendet werden.

Die Vorrichtung 1 gemäß **Fig. 1** weist neben dem Datenspeicher 3 eine Schreib- und Löscheinrichtung 6 und eine Ausleseeinrichtung 7 auf. Die Schreib- und Löscheinrichtung 6 weist eine Lichtquelle 8 zur Abgabe des optischen Schreibsignals 9 für das Schreiben in den Datenspeicher 3 auf. Um eine gewünschte Wellenlänge für das optische Schreibsignal 9 festzulegen, kann die Lichtquelle 8 monochromatisch sein. Alternativ oder zusätzlich kann der Lichtquelle 8 ein geeignetes Farbfilter 10 nachgeschaltet sein. Hinter einem Strahlteiler 11, der das optische Schreibsignal 9 hindurchtreten lässt, wird dessen Wellenfront 12 mit einem räumlichen Phasenmodulator 13, der auch unter seiner englischsprachigen Bezeichnung Spatial Phase Modulator (SPM) bekannt ist, in eine modulierte Wellenfront 24 umgeformt, die nach Fokussierung des optischen Schreibsignals 9 mit einem Objektiv 14 in den Festkörper 2 zu einer räumlichen Modulation der Intensitätsverteilung des optischen Schreibsignals 9 über den Festkörper 2 führt. Zusätzlich ist hier noch ein Polarisationsfilter 15 vorgesehen, der beispielsweise dazu benutzt werden kann, die Polarisation des optischen Schreibsignals 9 auf die räumliche Orientierung des einen Kristalls 5 abzustimmen. Durch die räumliche Modulation des optischen Schreibsignals 9 über dem Festkörper 2 wird darin eine räumliche Verteilung von Bereichen eingestellt, in denen das Protein 4 fluoreszierend ist. Diese räumliche Verteilung der Fluoreszenzeigenschaften des Proteins 4 in dem Festkörper 2 kann als dreidimensionale Anordnung von Datenbits in dem Festkörper 2 interpretiert werden. Die dabei in dem Datenspeicher 3 erreichbare Speicherdichte kann größer als 10¹² Bits pro cm³ Volumen des Festkörpers 2 sein. Um nach einer nicht mehr benötigten Verteilung der Fluoreszenzeigenschaften des Proteins 4 in dem Festkörper 2 darin eine einer anderen dreidimensionalen Anordnung von Datenbits entsprechende räumliche Verteilung einzustellen oder auch um den Festkörper 2 aus dem Protein 4 vor dem erstmaligen Einstellen einer Verteilung der Fluoreszenzeigenschaften des Proteins in einen definierten Zustand zu überführen, weist die Schreib- und Löscheinrichtung 6 eine weitere Lichtquelle 16 zur Bereitstellung eines optischen Löschsignals 17 einer bestimmten von der Wellenlänge des Schreibsignals 9 abweichenden Wellenlänge auf. Auch zu diesem Zweck kann die Lichtquelle 16 eine monochromatische Lichtquelle sein, die direkt die gewünschte Wellenlänge des Löschsignals 17 bereitstellt, oder sie kann mit einem entsprechenden Farbfilter 18 kombiniert sein. Grundsätzlich kann statt zwei getrennter Lichtquellen 8 und 16 für das Schreibsignal 9 einerseits und das Löschsignal 17 andererseits auch eine einzige Lichtquelle vorgesehen sein, die zur Bereitstellung des Schreibsignals 9 mit einem anderen Farbfilter 10 kombiniert wird als zur Bereitstellung des Löschsignals 17. Für die Beaufschlagung des Festkörpers 2 mit dem Löschsignal 17 wird das Löschsignal 17 mit dem Strahlteiler 11 in den Strahlengang des Schreibsignals 9 eingekoppelt. Dabei ist es in der Regel nicht erforderlich, den räumlichen Phasenmodulator (SPM) 13 auch für das optische Löschsignal 17 einzusetzen, da der Festkörper 2 mit einer homogenen Intensitätsverteilung des Löschsignals 17 beaufschlagt werden kann.

Um die mit der Schreib- und Löscheinrichtung 6 eingestellte Verteilung der Fluoreszenzeigenschaften des Proteins 4 in dem Festkörper 2 mit der Ausleseeinrichtung 7 auszulesen, muss die Fluoreszenz des Proteins 4 in seinen fluoreszierenden Bereichen angeregt werden. Bei den hier näher beschriebenen GFP-artigen Proteinen weist geeignetes Anregungslicht für diese Fluoreszenz dieselbe Wellenlänge wie diejenige des optischen Schreibsignals 9 auf. D. h., die Lichtquelle 8 ggf. in Verbindung mit dem Farbfilter 10 wird auch für das Auslesen des Datenspeichers 3 eingesetzt, allerdings zur Bereitstellung von Anregungslicht mit gegenüber dem optischen Schreibsignal 9 deutlich reduzierter Intensität. Zudem wird der Festkörper 2 zum Auslesen des Datenspeichers 3 homogen mit dem Anregungslicht von der Lichtquelle 8 beaufschlagt oder mit diesem abgescannt, ohne auf die in dem Festkörper 2 eingestellte räumliche Verteilung der Fluoreszenzeigenschaften des Proteins 4 Rücksicht zu nehmen. Diese räumliche Verteilung der Fluoreszenzeigenschaften wird mit der Ausleseeinrichtung 7 aus dem Festkörper aus dem angeregten kristallinen Protein 4 ausgelesen. Hierzu gelangt das von dem Protein 4 abgestrahlte Fluoreszenzlicht 19 durch ein Objektiv 20, einen Polarisationsfilter 21 und ein optisches Element 22 auf ein Lichtsensorarray 23, beispielsweise in Form einer bekannten CMOS-Kamera. Das Polarisationsfilter 21 entspricht in seiner Funktion dem Polarisationsfilter 15 der Schreib- und Löscheinrichtung 6. Das optische Element 22 kann beispielsweise ein Farbfilter zur wellenlängenspezifischen Selektion des Fluoreszenzlichts 17 und/oder eine Lochblendenanordnung aufweisen, um die räumliche Auflösung beim Erfassen der räumlichen Verteilung der Fluoreszenzeigenschaften des Proteins 4 in dem Festkörper 2 in ansich bekannter Weise zu erhöhen.

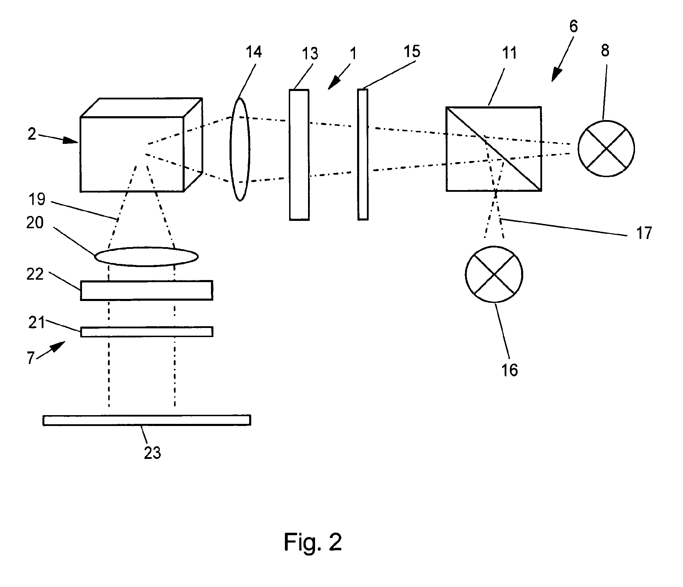

Die Ausführungsform der Vorrichtung 1 gemäß **Fig. 2** unterscheidet sich von derjenigen gemäß Fig. 1 in den folgenden Details. Der Festkörper 2 ist hier kein Einkristall 5 aus dem Protein 4 sondern aus Kleinkristallen aus den Proteinen 4 zusammengesetzt. Die Farbfilter 10 und 18 sind weggelassen, weil die Lichtquellen 8 und 16 direkt das optische Schreibsignal 9 bzw. das Löschsignal 17 mit der gewünschten Wellenlänge abgeben. Die Wellenfront 12 und die durch den räumlichen Phasenmodulator (SPM) 13 modulierte Wellenfront 24 des optischen Schreibsignals 9 sind zeichnerisch nicht wiedergegeben. Die Reihenfolgen des räumlichen Phasenmodulator (SPM)s 13 und des Polarisationsfilters 15 bzw. des Polarisationsfilters 21 und des optischen Elements 22 sind in dem Strahlengang sowohl der Schreib- und Löscheinrichtung 6 als auch der Ausleseeinrichtung 7 gegenüber Fig. 1 vertauscht. Die grundsätzliche Funktionsweise der Vorrichtung 1 gemäß Fig. 2 ist aber dieselbe wie diejenige gemäß Fig. 1.

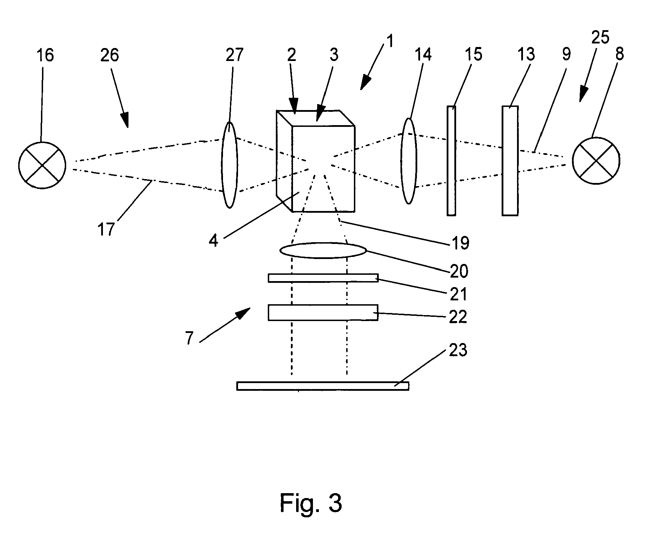

Bei der Ausführung der Vorrichtung 1 gemäß **Fig. 3** sind die Strahlengänge der Schreib- und Löscheinrichtung 6 gemäß den Fig. 1 und 2 in eine Schreibeinrichtung 25 und eine davon getrennte Löscheinrichtung 26 separiert. Entsprechend weist die Löscheinrichtung 26 hier ein eigenes Objektiv 27 auf. Daneben können in dem Strahlengang der Löscheinrichtung 26 noch weitere optische Elemente vorgesehen sein, die hier nicht dargestellt sind. Grundsätzlich ist aber auch die Funktion der Vorrichtung gemäß Fig. 1 identische mit derjenigen der Figuren 1 und 2, außer dass das optische Schreibsignal 9 und das Löschsignal 17 aus einander entgegen gesetzten Richtungen auf den Festkörper 2 einfallen.

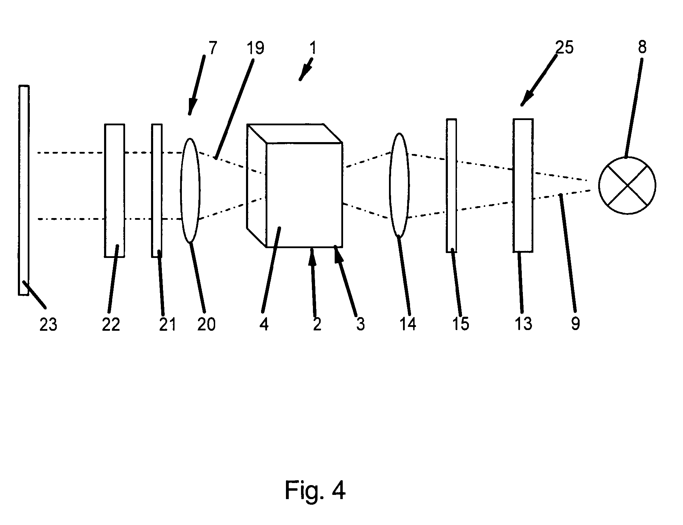

Die Ausführungsform der Vorrichtung 1 gemäß **Fig. 4** unterscheidet sich von derjenigen gemäß Fig. 3 dahingehend, dass die Löscheinrichtung 26 weggelassen ist und stattdessen die Ausleseeinrichtung 7 so ausgerichtet ist, dass ihr Objektiv 20 dem Objektiv 14 der Schreibeinrichtung 25 über den Festkörper 2 hinweg gegenüberliegt, so dass die Ausleseeinrichtung 7 und die Schreibeinrichtung 25 koaxial zueinander angeordnet sind. Auf eine Löscheinrichtung 26 ist hier verzichtet, weil das hier eingesetzte Protein 4 in dem Festkörper 2 in absehbarer Zeit aus einem fluoreszierenden Zustand allein aufgrund thermischer Einflüsse in den nicht-fluoreszierenden Zustand zurückkehrt. Durch Wiederholungen des Schreibsignals 9 kann der Speicherinhalt des Datenspeichers 3 dennoch in gewünschter Weise aufrechterhalten werden. Wenn andere Daten in dem Datenspeicher 3 gespeichert werden sollen, wird der Festkörper 2 einfach mit einem entsprechend geänderten Schreibsignal 9 überschrieben. Der vorherige Inhalt des Datenspeichers 3 geht dabei von allein verloren. Die Notwendigkeit, den Inhalt eines Datenspeichers aufzufrischen, besteht auch bei vielen üblichen Halbleiterdatenspeichern und ist kein spezieller Nachteil des hier beschriebenen Datenspeichers 3 mit dem Festkörper 2 aus dem Protein 4.

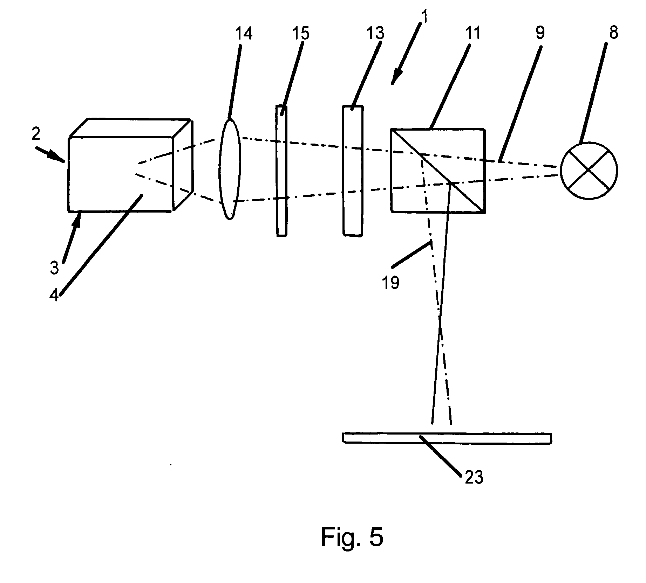

Bei der Vorrichtung 1 gemäß **Fig. 5** sind die Strahlengänge der Schreibeinrichtung 25 und der Ausleseeinrichtung 7 gemäß Fig. 4 zusammengefasst, wobei ein halbdurchlässiger Spiegel 28 verwendet wird, um das Fluoreszenzlicht 19 aus dem Strahlengang des optischen Schreibsignals 9 auf das Lichtsensorarray 23 umzulenken.

Als Lichtquellen 8 und 16 kommen bei allen Vorrichtungen 1 gemäß den Fig. 1 bis 5 Dauerstrichtlaser, gepulste Lichtquellen und insbesondere auch LED und Laserdioden in Betracht. Mit dem räumlichen Phasenmodulator 13 zur Modulation der Wellenfront des optischen Schreibsignals 9 kann sowohl eine zweidimensionale Intensitätsverteilung des optischen Schreibsignals 9 in dem Festkörper 2 hervorgerufen werden, mit dem das Volumen des Festkörpers 2 abgescannt wird, als auch direkt eine dreidimensionale Intensitätsverteilung über das Volumen des Festkörpers 2 hinweg.

Der Datenträger 3 der Vorrichtungen 1 ist biologisch abbaubar und auch verzehrfähig. Es ist damit möglich, ihn in Lebensmittel zu integrieren, um zu diesen Lebensmitteln gehörige Daten zu speichern.

### BEZUGSZEICHENLISTE

- 1: Vorrichtung
- 2: Festkörper
- 3: Datenspeicher
- 4: Protein
- 5: Einkristall
- 6: Schreib- und Löscheinrichtung
- 7: Ausleseeinrichtung
- 8: Lichtquelle
- 9: optisches Schreibsignal
- 10: Farbfilter
- 11: Strahlteiler
- 12: Wellenfront
- 13: räumlicher Phasenmodulator
- 14: Objektiv
- 15: Polarisationsfilter
- 16: Lichtquelle
- 17: Löschsignal
- 18: Farbfilter
- 19: Fluoreszenzlicht
- 20: Objektiv
- 21: Polarisationsfilter
- 22: optisches Element
- 23: Lichtsensorarray
- 24: modulierte Wellenfront
- 25: Schreibeinrichtung
- 26: Löscheinrichtung
- 27: Objektiv
- 28: halbdurchlässiger Spiegel

## Patentansprüche

1. Verfahren zum Schreiben einer dreidimensionalen Anordnung von Datenbits in einen Festkörper, mit den Schritten:
- Bereitstellen des Festkörpers aus einem Protein, das mit einem optischen Schreibsignal veränderbare Fluoreszenzeigenschaften aufweist und das in kristalliner Form vorliegt, und
- Einstellen einer der dreidimensionalen Anordnung von Datenbits entsprechenden räumlichen Verteilung der Fluoreszenzeigenschaften des Proteins in dem Festkörper mit dem optischen Schreibsignal.

2. Verfahren nach Anspruch 1, **dadurch gekennzeichnet, dass** der Festkörper aus einem Protein bereitgestellt wird, das mit dem Schreibsignal aus einem nicht fluoreszierenden in einen fluoreszierenden Zustand überführbar ist.

3. Verfahren nach Anspruch 1 oder 2, **dadurch gekennzeichnet, dass** der Festkörper aus einem Protein bereitgestellt wird, bei dem die mit dem optischen Schreibsignal herbeigeführte Änderung der Fluoreszenzeigenschaften umkehrbar ist.

4. Verfahren nach einem der Ansprüche 1 bis 3, **dadurch gekennzeichnet, dass** der Festkörper als Einkristall oder aus miteinander verpressten Kleinkristallen aus dem Protein bereitgestellt wird.

5. Vorrichtung zum Schreiben einer dreidimensionalen Anordnung von Datenbits in einen Festkörper, **dadurch gekennzeichnet, dass** der Festkörper (2) aus einem Protein (4), das mit einem optischen Schreibsignal (9) veränderbare Fluoreszenzeigenschaften aufweist und das in kristalliner Form vorliegt, ausgebildet ist.

6. Vorrichtung nach Anspruch 5, **dadurch gekennzeichnet, dass** das Protein (4) mit dem optischen Schreibsignal (9) aus einem nicht fluoreszierenden in einen fluoreszierenden Zustand überführbar ist.

7. Vorrichtung nach Anspruch 5 oder 6, **dadurch gekennzeichnet, dass** die mit dem optischen Schreibsignal (9) bei dem Protein (4) herbeigeführte Änderung der Fluoreszenzeigenschaften umkehrbar ist.

8. Vorrichtung nach einem der Ansprüche 5 bis 7, **dadurch gekennzeichnet, dass** der Festkörper (2) aus einem Einkristall (5) oder aus miteinander verpressten Kleinkristallen aus dem Protein (4) besteht.

9. Vorrichtung nach einem der Ansprüche 5 bis 8, **dadurch gekennzeichnet, dass** eine Abscanneinrichtung zum räumlichen Abscannen des Festkörpers (2) mit einem modulierten lokalisierten optischen Schreibsignal (9) oder ein räumlicher Phasenmodulator (13), insbesondere ein so genannter Spatial Phase Modulator, zum Beaufschlagen des Festkörpers (2) mit einem räumlich modulierten optischen Schreibsignal (9) vorgesehen ist.

10. Beschriebener Datenspeicher (3) mit einem Festkörper (2) aus einem in kristalliner Form vorliegenden Protein (4), wobei der Festkörper (2) eine einer dreidimensionalen Anordnung von Datenbits entsprechende räumliche Verteilung von Fluoreszenzeigenschaften des Proteins (4) aufweist.

11. Datenspeicher nach Anspruch 10, **dadurch gekennzeichnet, dass** der Festkörper (2) aus einem Einkristall (5) oder aus miteinander verpressten Kleinkristallen aus dem Protein (4) besteht.

12. Lebensmittel mit einem essbaren Datenspeicher (3) nach einem der Ansprüche 10 und 11.

13. Sicherheitsmerkmal, insbesondere für ein Wertpapier oder einen Identitäts- oder Berechtigungsausweis, mit einem Datenspeicher (3) nach einem der Ansprüche 10 und 11.

14. Sicherheitsmerkmal, insbesondere für ein Wertpapier, wie beispielsweise einen Geldschein, oder einen Identitäts- oder Berechtigungsausweis, wie beispielsweise einen Personalausweis, einen Führerschein oder eine Kreditkarte, mit einem Kristall aus einem Protein, das in dem Kristall mit einem optischen Signal bestimmter Intensität mit einer bestimmten Überführungsrate aus einem ersten nicht-fluoreszierenden Zustand in einen zweiten fluoreszierenden Zustand überführbar ist, wobei die Überführungsrate als Antwort auf das optische Signal optisch erfassbar ist.
